# EUROPEAN PATENT APPLICATION

(11) **EP 3 366 141 A1**
(43) Date of publication of application: **29.08.2018**
(21) Application number: 18157662.0
(22) Date of filing: 20.02.2018
(51) Int. Cl.: A23B 7/153, A23B 7/158, A23B 7/148, A23L 19/00, A23L 31/00, A23B 7/154, A23B 7/005

(54) **METHOD OF TREATMENT OF FOODSTUFFS SUCH AS VEGETABLES AND MUSHROOMS**

(30) Priority: 22.02.2017 IT 201700020101
(71) Applicant: Nova Funghi S.R.L., 35010 San Giorgio delle Pertiche PD (IT)
(72) Inventor: SCAPIN, DANIELE, 35010 SANTA GIUSTINA IN COLLE (IT); SCAPIN, PAOLO, 35010 SAN GIORGIO DELLE PERTICHE (IT)
(74) Representative: Maroscia, Antonio

(57) **Abstract**

A method of treatment of foodstuffs (A) containing liquids (L₁) and air, such as vegetables and mushrooms, comprising a step of a) washing the foodstuffs (A) with a washing liquid (L₂), a step of b) draining the foodstuffs (A) and a step of c) removing air from the foodstuffs (A) by applying vacuum. Steps are further provided of d) impregnating the foodstuffs (A) in a closed chamber (5) by applying thereto an atmosphere saturated with an impregnation liquid (L₃) and of e) packaging the foodstuffs (A) with a preserving liquid (L₄) in a packaging workstation (22). The method further comprises a step of f) steam cooking the foodstuffs (A) in a vessel (11) for at least partially extracting the liquids (L₁) contained therein and obtaining a broth (B), a step of g) collecting and storing the broth (B) in a first reservoir (12) connected to the vessel (11) and a step of h) recirculating the broth (B) stored in the first reservoir (12) to the closed chamber (5) of the impregnation step. The impregnation step d) and the packaging step e) are carried out using the broth (B) obtained during the step of cooking f) of batches (Pi) of previous foodstuffs (A) as an impregnation liquid (L₃) and as a preserving liquid (L₄) respectively.

## Description

### Field of The Invention

The present invention generally finds application in the food-processing industry and particularly relates to a method of treating foodstuffs, such as vegetables and mushrooms.

### Background art

Methods and plants have been long known to be used in the food-processing industry, for processing foodstuffs such as vegetables and mushrooms using suitable treatment liquids.

Particularly, mushroom processing includes a de-aeration step, in which the gas contained in the pores is removed using vacuum and an impregnation step, in which the gas-free pores are filled and saturated with an impregnation liquid.

Generally, the impregnation liquid comprises water and a plurality of additives, e.g. thickening agents, which are adapted to facilitate preservation of mushrooms, or flavors for modifying their taste.

A first drawback of these arrangements is that the use of these impregnation liquids is likely to considerably alter the original taste of a fresh mushroom and to deteriorate its organoleptic properties.

A further drawback is that these plants require large amounts of treatment water, whereby they have very high management costs.

In an attempt to at least partially obviate these drawbacks, methods and plants have been developed which use the liquid in which the vegetables or mushrooms have been cooked as an impregnation liquid.

US4143167 discloses a method of treating mushrooms, which comprises a step of de-aerating the mushrooms in a plurality of containers in which vacuum is first created and a step of impregnating the mushrooms with an impregnation liquid, which is also carried out in the same containers.

The impregnation liquid comprises the broth obtained from boiling the mushrooms and a plurality of additives selected from the group comprising albumin, casein, salt, spices and herbs.

After boiling, the liquid is collected and stored in a reservoir and is selectively fed to the containers during impregnation via respective conduits connected to the reservoir.

A first drawback of this arrangement is that the system for carrying out the treatment method does not comprise a mushroom boiling workstation connected to the reservoir, for direct feeding of the broth obtained from cooking the mushrooms.

Therefore, the boiling and impregnation steps must be carried out separately, and the tank must be periodically filled by an operator. This drawback prevents the method from being carried out continuously and causes an overall increase of the processing times.

A further drawback is that the broth is not subjected to thermal treatment or filtering before being used as an impregnation liquid, and may include contaminating agents or impurities that alter the organoleptic properties of the mushrooms during impregnation.

Another drawback is that boiling tends to soften and alter mushroom texture and that the water used for boiling excessively dilutes the liquids extracted from the mushrooms.

Yet another drawback is that the broth impregnated in the mushrooms is dispersed or partially removed during the later processing steps, and the final user will not be able to enjoy the original taste of the mushroom.

Another drawback is that this method includes many manual actions by the managing operator.

This drawback does not ensure uniformity of the operating conditions throughout the successive foodstuff treatment cycles.

### Technical Problem

In the light of the prior art, the technical problem addressed by the present invention consists in providing a method of treating foodstuffs such as vegetables and mushrooms that affords very high efficiency and can preserve the original taste of the foodstuff.

### Disclosure of the invention

The object of the present invention is to obviate the aforementioned drawback, by providing a method of treating foodstuffs such as vegetables and mushrooms that is highly efficient and relatively cost-effective.

A particular object of the present invention is to provide a treatment method as mentioned hereinbefore that can keep the taste and the organoleptic properties of the foodstuff unaltered.

A further object of the present invention is to provide a treatment method as discussed above that provides very high efficiency.

Another object of the present invention is to provide a method as discussed above that affords continuous treatment of the foodstuffs.

A further object of the present invention is to provide a treatment method that involves very low consumption and management costs.

Another object of the present invention is to provide a treatment method as discussed above, that can reduce contaminants and impurities in the impregnation liquid.

A further object of the present invention is to provide a treatment method as discussed above that does not alter the texture of the foodstuff.

Another object of the present invention is to provide a method as discussed above that reduces the actions to be carried out by an operator during foodstuff treatment.

Yet another object of the present invention is to provide a method as mentioned above that ensures consistent operating conditions during successive treatment cycles.

These and other objects, as more clearly explained hereinafter, are fulfilled by a method of treating foodstuffs such as vegetables and mushrooms as defined in claim 1, which comprises a step of washing, a step of draining and a step of removing air from the foodstuffs.

These are followed by a step of impregnating the foodstuffs, a step of cooking them to extract liquids and obtain a broth and a step of packaging the cooked and impregnated foodstuffs.

The broth is collected, stored and sent to a closed chamber for foodstuff impregnation.

Advantageous embodiments of the invention are obtained in accordance with the dependent claims.

### Brief Description of The Drawings

Further features and advantages of the invention will become more apparent from the detailed description of a preferred, non exclusive embodiment of a method of treating foodstuffs such as vegetables and mushrooms according to the invention and a plant for carrying out the method, which are described as non limiting examples with the help of the accompanying drawings in which:
FIG. 1 is a block diagram of the method of treating foodstuffs of the invention;
Fig. 2 is a schematic view of a plant for carrying out the inventive method.

### Detailed description of a preferred exemplary embodiment

Particularly referring to the figures, a method and a plant 1 for treating foodstuffs A such as vegetables and mushrooms are shown.

For example, the foodstuffs A may be selected from the group comprising fruits and vegetables, such as apples, leafy vegetables, tomatoes and various types of mushrooms, without departure from the scope of the present invention.

These foodstuffs A, and particularly mushrooms, have a texture that comprises interstices and pores containing air and liquids L₁.

The latter L₁ generally consist of water with a plurality of substances dissolved therein, which are responsible for the characteristic taste of the mushroom.

In a preferred embodiment of the invention, the method comprises a step of a) washing the foodstuffs A with a washing liquid L₂, preferably water, and a step of b) draining the foodstuffs A.

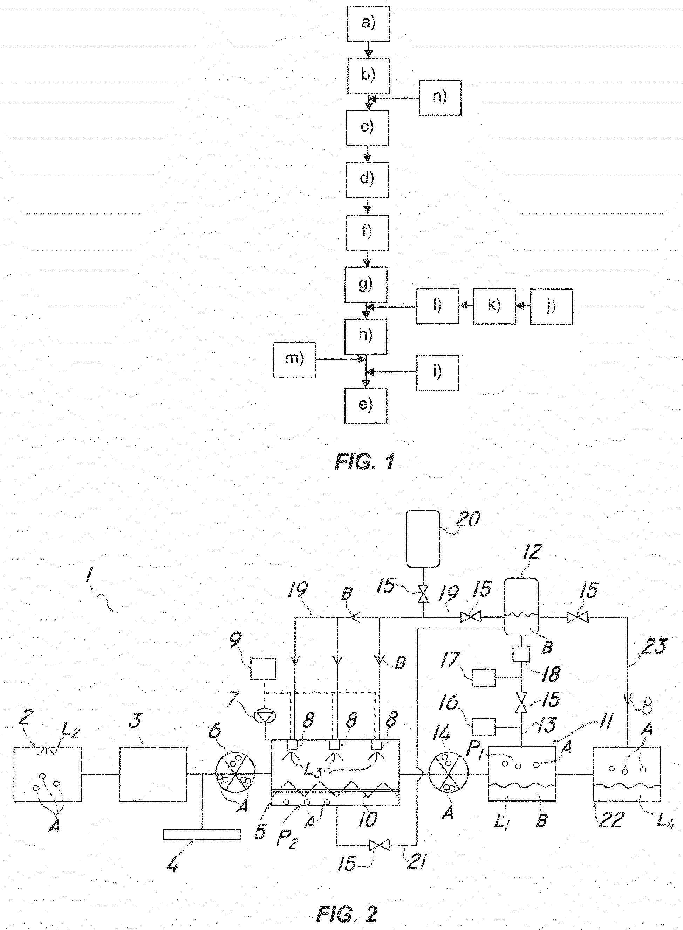

As schematically shown in the plant of FIG. 2, the washing step a) is carried out by immersing the foodstuffs A in at least one tank 2 of cold water and the draining step b) is carried out by vibration, using a vibrating screen 3.

Advantageously, the washing step may be repeated a predetermined number of times before draining the foodstuffs A and may be carried out by transferring them through a pair of contiguous, separate tanks 2 containing cold water.

Downstream from the draining step b), a step is provided of n) sorting the foodstuffs A, to exclude the defective ones from the later steps of the method, using optical selection means 4 of known types.

Then, the method comprises a step of c) removing the air contained in the pores of the foodstuffs by applying vacuum, and a step of d) impregnating the foodstuffs A in a closed chamber 5, by applying an atmosphere saturated with an impregnation liquid L₃.

As used herein, the term impregnation designates the process in which the pores or interstices from which air was removed by vacuum are filled with the liquid L₃ that has been used to saturate the atmosphere in the closed chamber 5.

The foodstuffs A may be transferred from the vibrating screen 3 to the closed chamber 5 by means of an elevator, not shown, and an inlet rotary valve 6. A belt conveyor, not shown, may be possibly provided between the valve 6 and the elevator.

Advantageously, the air removal step c) and the impregnation step d) may be both carried out in the closed chamber 5.

For this purpose, as shown in FIG. 2, the chamber 5 will comprise a vacuum pump 7 and a plurality of nozzles 8 for the impregnation liquid L₃, which are connected to a PLC control unit 9.

The pump 7 and the nozzles 8 will be selectively controlled and operated by the control unit 9 during the air removal step c) and the impregnation step d) respectively.

Furthermore, the closed chamber 5 comprises a screw feeder 10 for feeding the foodstuffs A, which is also connected to the control unit 9.

Therefore, the latter will selectively operate the pump 7, the nozzles 8 and the screw feeder 10 to change the duration of the steps c) and d) and the exposure of the foodstuffs A to vacuum or to the saturated atmosphere inside the chamber 5, according to the final treatment characteristics desired by the operator.

Then, a step of e) packaging the foodstuffs A with a preserving liquid L₃ in a packaging workstation 22, is carried out.

In a peculiar aspect of the invention, the method comprises a step of f) steam cooking the foodstuffs A in a vessel 11, or cooker, for at least partially extracting the liquids L₁ contained therein and obtaining a broth B and a step of g) collecting and storing the broth B in a first reservoir 12 connected to the vessel 11 via a first conduit 13.

The vessel 11 may be connected to an external circuit, not shown, for feeding food-grade steam and thereby cooking the foodstuffs A for a time preferably ranging from 6 to 8 minutes.

The foodstuffs A may be transferred to the vessel 11 for steam cooking by means of a rotary valve 14 located at the exit of the closed chamber 5, a discharge conduit and a cleated elevator, not shown, successively arranged relative to the valve 14.

Storage of the broth B in the first reservoir 12 may be facilitated by suitable valve means 15 located in the first conduit 13, as shown in FIG. 2.

Furthermore, the method includes, downstream from the storage step g), a first cooling step j) using a cooling tower 16 and a second cooling step k) using a chiller 17.

The cooling tower 16 and the chiller 17 are placed along the first conduit 13 and can cool the broth B from a temperature of 96°C to a temperature of 5°C.

As the broth B flows through the first conduit 13, it may further undergo a filtration step I) with one or more rotary filters 18.

The method includes a step of h) recirculating the broth B stored in the first reservoir 12 to the closed chamber 5 of the impregnation step through a second conduit 19, as shown in FIG. 2.

Therefore, the impregnation liquid L₃ is composed of a portion of the broth B obtained from cooking the foodstuffs A and can enrich and enhance their organoleptic properties, while maintaining their original taste.

It shall be noted that the broth B obtained during cooking of a previously treated batch P₁ of foodstuffs A, is used for the step of impregnating subsequent batches P₂ of foodstuffs A that are being fed along the plant 1.

Advantageously, a further step may be provided, consisting in i) recirculating the broth B to the packaging station 22 via a third conduit 23 connected to the first reservoir 12.

Thus, the preserving liquid L₄ in the packages may consist of the broth B and the foodstuff A may be constantly placed in contact with their liquids throughout the treatment process.

The second conduit 19 also comprises valve means 15 for feeding the broth B under pressure to the nozzles 8 of the closed chamber 5, such that it may be used as an impregnation liquid L₃ and create the saturated atmosphere.

Alternatively, a step is provided downstream from the recirculation step h), consisting in m) adding a predetermined amount of starches to the broth B through a second reservoir 20 located along the second conduit 19.

The second reservoir 20 may be connected to the second conduit 19 via additional valve means 15, which are also connected to the control unit 9 for selectively feeding the nozzles 8 of the closed chamber 5.

It will be appreciated that in FIG. 2, the connections of the control unit 9 with the various valve means 15 and with the screw feeder 10 have been omitted for improved understanding of the figures.

The broth B that has not been used during the impregnation step d) may be recovered from the closed chamber 5 through a recirculation conduit 21 which is also connected to the first reservoir 12, allowing reuse thereof in the next impregnation cycles.

All the method steps from a) to h) are automatically carried out as a sequence. The particular configuration of the plant 1 that is used for the treatment method and the connection of its various parts allow simultaneous treatment of different batches of foodstuffs A without stopping their feed.

In addition, the above discussed method and plant 1 considerably limit the actions of the managing operator, as the broth B is stored and fed in a fully automated manner.

It will be apparent from the foregoing that the treatment method of the invention fulfills the intended objects and particularly ensures high treatment efficiency while keeping the original taste of the original foodstuffs unaltered.

While the treatment method has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in food-processing factories, particularly for treatment of foodstuffs of plant origin or mushrooms.

## Claims

1. A method of treatment of foodstuffs (A) containing liquids (L₁) and air, such as vegetables and mushrooms, said method comprising the steps of:
a) washing the foodstuffs (A) with a washing liquid (L₂);
b) draining the foodstuffs (A);
c) removing air from the foodstuffs (A) by applying vacuum;
d) impregnating the foodstuffs (A) in a closed chamber (5) by applying thereto an atmosphere saturated with an impregnation liquid (L₃);
e) packaging the foodstuffs (A) with a preserving liquid (L₄) in a packaging workstation (22);
**characterized by** comprising a step of f) steam cooking the foodstuffs (A) in a vessel (11) for at least partially extracting the liquids (L₁) contained therein and obtaining a broth (B), a step of g) collecting and storing the broth (B) in a first reservoir (12) connected to said vessel (11) and a step of h) recirculating the broth (B) from said first reservoir (12) toward said closed chamber (5) of the impregnation step;
wherein said steps of d) impregnating and e) packaging are carried out using the broth (B) obtained during the step of cooking f) of previous batches (P₁) of foodstuffs (A) as an impregnation liquid (L₃) and as a preserving liquid (L₄) respectively.

2. A method as claimed in claim 1, **characterized in that** said first reservoir (12) is connected to said vessel (11) via a first conduit (13), said first reservoir (12) being connected to said closed chamber (5) via a second conduit (19) to promote recirculation of the broth (B) during said step h).

3. A method as claimed in claim 1, **characterized in that** said closed chamber (5) comprises therein a plurality of nozzles (8) for the impregnation liquid (L₃) and a vacuum pump (7), which are selectively controlled and operated during said impregnation step d) and said de-aeration step c).

4. A method as claimed in claim 2, **characterized by** comprising a step of i) recirculating the broth (B) from said first reservoir (12) to said packaging station (22) via a third conduit (23).

5. A method as claimed in claim 2, **characterized by** comprising, downstream from said collection and storage step g), a first step of j) cooling the broth (B) using a cooling tower (16), and a second cooling step k) using a chiller (17), said tower (16) and said chiller (17) being located along said first conduit (13).

6. A method as claimed in claim 5, **characterized by** comprising, downstream from said collection step g), a step of I) filtering the broth (B) using one or more rotary filters (18) located along said first conduit (13).

7. A method as claimed in claim 2, **characterized by** comprising, downstream from said recirculation step h), a step of m) adding a predetermined amount of starches to the broth (B) through a second reservoir (20) located along said second conduit (19).

8. A method as claimed in claim 1, **characterized in that** said closed chamber (5) comprises a screw feeder (10) for feeding the foodstuffs (A).

9. A method as claimed in claim 1, **characterized in that** said washing step a) is carried out by immersing the foodstuffs (A) in at least one tank (2) of cold water and said draining step b) is carried out by vibration, using a vibrating screen (3).

10. A method as claimed in claim 9, **characterized in that** the foodstuffs (A) are transferred from said vibrating screen (3) to said closed chamber (5) by means of an elevator and an inlet rotary valve (6), an outlet rotary valve (14) being provided for discharging the foodstuffs (A) from said chamber (5).

11. A method as claimed in claim 1, **characterized by** comprising, downstream from said draining step b), a step of n) sorting the foodstuffs using optical selection means (4).

12. A method as claimed in claim 2, **characterized in that** said storage step g) and said recirculation step h) are carried out using valve means (15), which are located in said first conduit (13) and said second conduit (19) respectively.
